(19) Europäisches Patentamt
European Patent Office
Office européen des brevets

(11) **EP 4 418 230 A1**

(12) **DEMANDE DE BREVET EUROPEEN**

(43) Date de publication:
**21.08.2024 Bulletin 2024/34**

(21) Numéro de dépôt: **24154991.4**

(22) Date de dépôt: **31.01.2024**

(51) Classification Internationale des Brevets (IPC):
**G08G 1/01** (2006.01) **G01C 21/32** (2006.01)
**G01C 21/00** (2006.01) **G06F 16/29** (2019.01)
**G06T 17/05** (2011.01) **G08G 1/065** (2006.01)
**G08G 1/052** (2006.01)

(52) Classification Coopérative des Brevets (CPC):
**G08G 1/0112; G01C 21/32; G01C 21/3804;
G01C 21/3819; G01C 21/3822; G01C 21/3841;
G01C 21/387; G06F 16/29; G08G 1/0116;
G08G 1/0129; G08G 1/0133; G08G 1/0141;
G08G 1/0145; G08G 1/052; G08G 1/065**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **14.02.2023 FR 2301368**

(71) Demandeur: **IFP Energies nouvelles
92500 Rueil-Malmaison (FR)**

(72) Inventeurs:
• **GONZALEZ DE COSSIO ECHEVERRIA,
Francisco Jose
92852 RUEIL-MALMAISON CEDEX (FR)**
• **DE NUNZIO, Giovanni
92852 RUEIL-MALMAISON CEDEX (FR)**
• **SABIRON, Guillaume
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(54) **PROCEDE DE DETERMINATION D'AU MOINS UN ATTRIBUT DU TRAFIC ROUTIER POUR UN RESEAU DE TRANSPORT**

(57) La présente invention concerne un procédé de détermination d'au moins un attribut (ATT) du trafic routier à partir d'au moins deux représentations (RES A, RES B) du réseau de transport, au moins un paramètre du trafic routier étant associé à une des deux représentations (RES A, RES B) du réseau de transport. Pour déterminer l'attribut de trafic routier, on construit une troisième représentation (RES C) du réseau de transport, au moyen d'une correspondance (COR) entre les deux représentations du réseau de transport, la correspondance étant mise en oeuvre à l'issue d'une étape d'élimination (ELI) de brins.

Figure 1

**Description**

**Domaine technique**

La présente invention concerne le domaine de la détermination d'informations techniques relatives au trafic routier de véhicules pour un réseau de transport, notamment un réseau routier. En particulier, l'invention concerne un procédé de détermination d'un débit de véhicules et/ou de la vitesse de véhicules et/ou de la quantité de polluants émis par des véhicules sur un réseau de transport, notamment un réseau routier.

Disposer de moyens efficaces pour échanger des informations spatiales entre différents individus est un sujet de la plus haute importance pour l'humanité depuis de nombreux siècles. La science qui concerne la modélisation de l'information spatiale est connue sous le nom de cartographie. Plus précisément, la cartographie étudie la représentation graphique d'une zone géographique.

Au cours des dernières décennies, l'explosion des progrès technologiques dans les systèmes informatiques a révolutionné le domaine de la cartographie. Cette révolution a été menée principalement par le développement de la science de l'information géographique, une terminologie inventée par Roger Tomlinson dans les années 1960. Un système d'information géographique (SIG) est un système informatique permettant de capturer, stocker, vérifier et afficher des données relatives à des positions sur la surface de la Terre. Cette technologie est basée sur des couches, c'est-à-dire que tout type de données comprenant des informations de localisation peut être ajouté comme couche cartographique pour la compléter. Par exemple, les couches peuvent inclure des données socio-économiques d'une population, des informations sur le paysage, les positions de tous types de sites (fermes, usines, écoles, magasins, etc.) et, notamment, les réseaux routiers.

L'objectif principal d'un réseau géométrique ou spatial dans un SIG de transport est de modéliser des caractéristiques interconnectées, tout comme les graphiques en mathématiques ou en informatique ; les exemples importants incluent les réseaux routiers mentionnés et les réseaux de services publics (électricité, gaz, eau, etc.). Les réseaux spatiaux sont devenus essentiels aux développements modernes dans des domaines tels que l'énergie, les transports et l'environnement. En effet, la modélisation correcte d'une zone géographique d'intérêt permet de résoudre d'innombrables problèmes techniques tels que : la planification des infrastructures, l'analyse de la sécurité des transports, la surveillance et le contrôle du trafic, l'analyse de la demande de transport, le routage et l'ordonnancement, et l'évaluation de l'impact environnemental.

De nos jours, différents réseaux spatiaux sont développés sous la forme de collections de données libres ou privées. Quelques cas bien connus de réseaux sont OpenStreetMap™ (OSM), HERE Maps™ et Google Maps™. Malheureusement, à ce jour, il n'existe pas de réseau standard auquel se référer. Cela pose un problème crucial lorsqu'il s'agit d'intégrer des couches équivalentes provenant de sources différentes.

Aujourd'hui, les métropoles, les bureaux d'études et les AASQA (Associations agréées de surveillance de la qualité de l'air), s'appuient sur des outils de modélisation et de simulation des déplacements pour planifier et simuler l'impact de mesures de régulation et de travaux futurs sur la congestion et la qualité de l'air. Ces outils de simulation requièrent de modéliser une offre de transport, sous forme d'un réseau routier ou de transports en commun, sur lequel affecter la demande de mobilité. Les réseaux routiers ainsi modélisés sont souvent issus de sources cartographiques diverses et sont enrichis par les acteurs susmentionnés avec des paramètres propres à chaque étude (par ex. flux de trafic sur les arcs du réseau, vitesse moyenne historique ou mesurée sur les arcs du réseau, etc.).

Ces réseaux routiers, même lorsqu'ils sont enrichis avec des paramètres spécifiques à l'expertise de chaque acteur, sont loin d'être exhaustifs. En effet, souvent, il est nécessaire de contextualiser ou d'enrichir davantage ou d'améliorer la précision des paramètres de ces réseaux routiers avec d'autres paramètres provenant d'autres sources de données (par ex. signalisation ou pente ou nombre de voies sur les arcs du réseau). Le problème réside donc dans le manque d'outils permettant de faire la correspondance directe entre les arcs routiers d'un réseau routier A avec certains paramètres et les arcs routiers d'un réseau routier B avec d'autres paramètres et défini sur un référentiel cartographique différent.

Afin de pouvoir compléter et améliorer (notamment la précision) correctement les paramètres disponibles en fusionnant plusieurs sources de données, il est nécessaire de lever ce verrou lié à la correspondance de réseaux définis sur référentiels cartographiques différents.

**Technique antérieure**

Les approches de « mapmatching » (pouvant être traduit par cartospondance) présentes dans la littérature se limitent à déterminer la correspondance entre deux arcs routiers uniquement en fonction de leur proximité spatiale, parfois en ajoutant leur orientation comme discriminant. Cela induit à des erreurs significatives surtout pour des réseaux denses comme les milieux urbains pour lesquels la simple proximité spatiale ou l'orientation ne sont pas suffisantes pour réduire l'incertitude sur la correspondance. Dans la majorité des applications, ces erreurs de « mapmatching » ne sont pas critiques. En revanche, pour déterminer un attribut du trafic routier, faire correspondre un arc routier secondaire avec un grand axe du fait de leur proximité uniquement générerait des erreurs significatives dans les estimations des quantités de polluants émis, par exemple, au vu de la grande différence de débit véhiculaire pour les deux arcs.

L'intégration, la mise en correspondance ou l'alignement de différents réseaux spatiaux représentant la même zone géographique est désormais considérée comme un domaine à part entière. Ceci est dû à l'importance du transfert de données entre les réseaux, et à l'impossibilité de le faire manuellement pour de grands ensembles de données. Les premières méthodes enregistrées sur la mise en correspondance de réseaux remontent probablement au travail remarquable d'Alan Saalfeld et de ses collègues dans les années 1980. Ces auteurs présentent une méthode semi-automatique de mise en correspondance des caractéristiques de deux cartes différentes afin de transmettre des informations entre elles. Les cartes considérées sont le « U.S. Geological Survey » et le « Census Bureau » du Washington, D.C. Le transfert d'informations comprend la classe de route, le nom des rues et les plages de numéros de maison. Les techniques employées comprennent l'alignement de cartes par « rubber-sheeting » (pouvant être traduit par transformation élastique) et divers éléments issus de domaines mathématiques tels que : la topologie, la théorie des graphes, les statistiques et l'optimisation.

Les méthodes modernes de mise en correspondance ont tendance à être séparées de différentes manières, par exemple : déterministe et probabiliste, discrète et continue, ou géométrique et topologique. Cela complique la classification correcte d'une quantité toujours croissante de littérature consacrée à ce sujet. Il est important de noter, néanmoins, que les mesures de similarité restent au coeur du problème de correspondance de réseaux. Elles peuvent être classées en mesures géométriques, topologiques, attributaires, contextuelles et sémantiques. Les mesures géométriques sont particulièrement pertinentes et sont classées en plusieurs groupes, dont les distances d'Euclide, de Hausdorff et de Fréchet. En ce qui concerne la correspondance, les stratégies de mise en correspondance tendent à varier entre un-à-un (1:1 - un brin vers un brin), un-à-multiple (1:n - un brin vers plusieurs brins) et multiple-à-multiple (n:m - plusieurs brins vers plusieurs brins), selon les spécifications du problème. Enfin, les méthodes de correspondance peuvent être évaluées par des scores statistiques communs tels que la précision et le rappel.

Le problème de recherche initialement motivé par le « Census Bureau » se poursuit dans différentes directions. Le document « VOLKER W., DIETER F., Matching spatial data sets: a statistical approach, 1999, International Journal of Geographical Information Science, 13(5) » présente une approche de mise en correspondance relationnelle pour l'intégration de données spatiales provenant de différentes sources. L'approche est basée sur des études statistiques de réseau et le problème de correspondance est transposé dans un système de communication où les outils de la théorie de l'information sont appliqués pour trouver une solution optimale. La recherche plus abstraite développée dans le document : « ALT, H., EFRAT, A., ROTE, G., WENK, C., Matching planar maps, 2003, Journal of Algorithms, 49 » fournit des outils puissants pour mesurer la similarité des modèles de segments de lignes dans le plan. Les mesures de distance utilisées incluent des généralisations de la distance de Fréchet et, de manière intéressante, considèrent également la similarité entre des courbes polygonales et des graphes ou même entre deux graphes. La thèse : « ZHANG, M., Methods and Implementations of Road-Network Matching, 2009, PhD dissertation, Technical University of Munich » concerne une approche de mise en correspondance automatique pour les réseaux routiers. L'auteur discute de la popularité des algorithmes de correspondance « Buffer Growing » (pouvant être traduit par croissance de la zone tampon) et « Itérative Closest Point » (pouvant être traduit point le plus proche itératif) et de leurs combinaisons. Il propose une nouvelle approche contextuelle (déjà commercialisée) basée sur l'algorithme « Delimited-Stroke-Oriented » (pouvant être traduit par orienté vers les caractères délimités) pour utiliser les précieuses informations contextuelles. Une méthode de mise en correspondance largement appliquée et utilisée avec succès dans la région allemande (TOMTOM, HERE maps, ATKIS) est étudiée dans le document : « ZHANG, M., YAO, W., MENG, L., Automatic and Accurate Conflation of Different Road-Network Vector Data towards Multi-Modal Navigation, 2016, ISPRS Int. J. Geo-Inf., 5(5) ».

La demande de brevet US2021231444 décrit une méthode de similitude des réseaux routiers en utilisant des distances basées sur la géométrie. Cette approche est basée sur différentes notions de distances qui peuvent être appliquées entre les objets géométriques dans les représentations des réseaux routiers. Toutefois, cette méthode n'est pas assez flexible en termes d'applicabilité. En particulier, cette méthode nécessite des ressources informatiques importantes (mémoire, processeur) ainsi qu'un temps de calcul important.

Le brevet US6564224 décrit une méthode nécessitant moins de ressources informatiques. En effet, cette méthode décompose la mise en correspondance en considérant d'abord les noeuds du réseau routier. Cette approche permet un appariement rapide malgré les dimensions du réseau routier. Toutefois, cette rapidité est réalisée au détriment de la robustesse de la méthode, en raison de l'absence de prise en compte de géométries complexes dans la première étape de l'algorithme.

**Résumé de l'invention**

La présente invention concerne la détermination d'un attribut du trafic routier (par exemple débit de véhicules, vitesse de véhicules, quantité de polluants émis) à partir d'au moins deux représentations d'un réseau de transport de manière flexible, adaptable, robuste, et avec une utilisation limitée de ressources informatiques. Dans ce but, l'invention concerne un procédé de détermination d'au moins un attribut du trafic routier à partir d'au moins deux représentations du réseau de transport, au moins un paramètre du trafic routier étant associé à une des deux représentations du réseau de transport. Pour déterminer l'attribut de trafic routier, on construit une troisième représentation du réseau de transport, au moyen d'une correspondance entre les deux représentations du réseau de transport, la correspondance étant mise en oeuvre à l'issue d'une étape d'élimination de brins (qui utilise au moins une version de la distance de Fréchet discrète). Cette étape d'élimination de brins permet de simplifier l'étape de correspondance des brins en réduisant le nombre de brins possibles, ce qui permet de réduire les ressources informatiques utilisées et le temps de calcul. De plus, cette étape permet la robustesse et l'adaptabilité du procédé selon l'invention.

L'invention concerne un procédé de détermination d'au moins un attribut du trafic routier pour un réseau de transport, ledit réseau de transport étant représenté par au moins une première et une deuxième représentations de réseau de transport, chaque représentation de réseau de transport comprenant une pluralité de brins, et au moins une desdites première ou deuxième représentations de réseau de transport comprenant au moins un paramètre du trafic routier associé à plusieurs brins de ladite représentation de réseau de transport. Pour ce procédé, on met en oeuvre les étapes suivantes :

a. Pour chaque brin de ladite première représentation de réseau de transport, on élimine des brins de ladite deuxième représentation de réseau de transport au moyen d'au moins une distance de Fréchet discrète ;

b. Pour au moins un brin de ladite première représentation de réseau routier, on détermine une correspondance entre le brin de ladite première représentation de réseau de transport et au moins un brin de ladite deuxième représentation de réseau de transport parmi des brins de ladite deuxième représentation de réseau de transport non éliminés ;

c. On construit une troisième représentation de réseau de transport au moyen desdites première et deuxième représentations de réseau de transport et de ladite correspondance déterminée entre des brins desdites première et deuxième représentations de réseau de transport ; et

On détermine ledit attribut du trafic routier sur au moins un brin de ladite troisième représentation de réseau de transport au moyen de ladite troisième représentation de réseau de transport et dudit paramètre de trafic routier.

Avantageusement, ledit attribut de trafic routier est choisi parmi une quantité de polluants émis par ledit trafic routier, un débit de véhicules, une vitesse de circulation de véhicules, une quantité d'émissions sonores émises par ledit trafic routier.

Selon un mode de réalisation, ledit paramètre de trafic routier est choisi parmi une quantité de polluants émis par ledit trafic routier, un débit de véhicules, une vitesse de circulation de véhicules, une quantité d'émissions sonores émises par ledit trafic routier.

Conformément à une mise en oeuvre, ledit procédé comprend une étape préalable de pré-traitement desdites première et deuxième représentations de réseau de transport.

De manière avantageuse, ladite étape de pré-traitement comprend une sous-étape de découpe desdites première et deuxième représentations de réseaux de transport en plusieurs portions de réseau de transport, et ensuite on applique les étapes d'élimination de brins et de correspondance de brins pour chaque portion de réseau de transport.

Selon un aspect, lesdites première et deuxième représentations de réseau de transport comprennent le nom desdits brins routier, et l'étape d'élimination de brins comprend une sous-étape d'élimination de brins de ladite deuxième représentation de réseau de transport par comparaison des noms des brins avec ceux ladite première représentation de réseau de transport.

Selon une option de réalisation, l'étape d'élimination de brins comprend en outre une élimination de brins de ladite deuxième représentation de réseau de transport en fonction d'un critère de couverture d'un brin de ladite première représentation de réseau de transport par un brin de ladite deuxième représentation de réseau de transport.

Conformément à un mode de réalisation, le procédé comprend en outre une étape d'évaluation de la correspondance entre lesdites première et deuxième représentations de réseau de transport, avant l'étape de construction de ladite troisième représentation de réseau de transport, et en fonction de ladite évaluation, on répète les étapes d'élimination de brins et de correspondance de brins en inversant l'ordre desdites première et deuxième représentations de réseau de transport.

Selon une mise en oeuvre, on construit ladite troisième représentation de réseau de transport à partir d'une représentation géométrique de ladite première ou de ladite deuxième représentation de réseau de transport, ou à partir d'une fusion desdites première et deuxième représentations de réseau de transport.

Conformément à un aspect, ledit procédé comprend une étape préalable d'acquisition dudit paramètre du trafic routier.

Selon un mode de réalisation, on affiche ledit attribut de trafic routier sur ladite troisième représentation de réseau de transport au moyen d'un système informatique ou d'un téléphone intelligent.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre les étapes du procédé selon un premier mode de réalisation de l'invention.

La figure 2 illustre les étapes du procédé selon un deuxième mode de réalisation de l'invention.

La figure 3 illustre les étapes du procédé selon un troisième mode de réalisation de l'invention.

La figure 4 illustre, pour un premier exemple, une première représentation d'un réseau routier.

La figure 5 illustre, pour le premier exemple, une deuxième représentation d'un réseau routier.

La figure 6 illustre, pour le premier exemple, cinq portions du réseau routier avec les deux représentations des figures 4 et 5 superposées.

La figure 7 illustre, pour le premier exemple, le troisième réseau construit au moyen du procédé selon un mode de réalisation de l'invention.

La figure 8 illustre, pour le premier exemple, la vitesse moyenne de véhicules sur le réseau routier déterminé au moyen du procédé selon un mode de réalisation de l'invention.

La figure 9 illustre, pour le premier exemple, la quantité d'oxydes d'azote émis par les véhicules sur le réseau routier déterminée au moyen du procédé selon un mode de réalisation de l'invention.

La figure 10 illustre, pour le premier exemple, la quantité de dioxyde de carbone émis par les véhicules sur le réseau routier déterminée au moyen du procédé selon un mode de réalisation de l'invention.

La figure 11 illustre, pour le premier exemple, la quantité d'hydrocarbures imbrulés émis par les véhicules sur le réseau routier déterminée au moyen du procédé selon un mode de réalisation de l'invention.

La figure 12 illustre, pour un deuxième exemple, une portion de réseau routier avec superposition de deux représentations de réseau routier.

La figure 13 illustre, pour le deuxième exemple, un brin de la première représentation à faire correspondre à un brin de la deuxième représentation.

La figure 14 illustre, pour le deuxième exemple, un brin de la deuxième représentation correspondant au brin identifié en figure 13 déterminé au moyen du procédé selon un mode de réalisation de l'invention.

La figure 15 illustre, pour le deuxième exemple, un brin de la deuxième représentation correspondant au brin identifié en figure 13 déterminé au moyen d'un procédé selon l'art antérieur.

**Description des modes de réalisation**

La présente invention concerne la détermination d'un attribut de trafic routier sur un réseau de transport, notamment un réseau routier, un réseau de transport en commun ou un réseau de transport en mobilité douce (bicyclette, trottinette, etc.). On appelle réseau de transport un ensemble de routes et de chemins dans une zone géographique prédéfinie. Un réseau routier est un ensemble de routes et de chemins dans une zone géographique praticables par des véhicules routiers. L'expression « trafic routier » désigne le trafic du mode de transport considéré. Cette zone géographique prédéfinie peut être un quartier d'une ville, une ville, une communauté de communes, un département, etc. Un brin du réseau de transport est une subdivision élémentaire du réseau de transport entre deux noeuds consécutifs du réseau de transport. Par exemple, un brin du réseau de transport peut être une route entre deux intersections consécutives, entre deux signalisations consécutives, entre une intersection et une signalisation, ou une partie d'autoroute entre deux sorties consécutives, etc. Ainsi, on dispose d'un découpage fin du réseau de transport, et d'un modèle qui est adapté au réseau de transport sans données microscopiques. Dans la suite de la description, on considère le réseau routier comme réseau de transport. Toutefois, l'invention est applicable à d'autres modes de transport tels que les transports en commun, les mobilités douces, etc.

On appelle attribut du trafic routier une caractéristique physique du trafic routier sur au moins un brin du réseau routier. Il peut s'agir notamment de :

- La quantité de polluants émis par les véhicules sur le réseau routier, par exemple la quantité d'oxydes d'azote, la quantité de dioxyde de carbone, la quantité d'hydrocarbures imbrulés, etc.,
- Le débit routier, c'est-à-dire le nombre de véhicules par unité de temps qui passent par un réseau routier,
- Une vitesse de véhicules, par exemple une vitesse moyenne ou une vitesse instantanée,
- La quantité des émissions sonores émises par les véhicules sur le réseau routier,
- Un indicateur de sécurité (pouvant par exemple être défini par un taux lié au niveau de congestion du brin routier, à la vitesse limite sur le brin routier, à l'infrastructure du brin routier), etc.

Le réseau routier peut être représenté par un graphe, appelé graphe routier ou représentation de réseau routier. Le graphe routier est composé d'un ensemble d'arêtes et de noeuds, les noeuds pouvant représenter les intersections, et les arêtes les portions de routes (brins) entre les intersections. Le graphe routier peut être obtenu à partir d'un service en ligne (« webservice ») de cartographie, par exemple Here T$^M$ (Here Apps LLC, Pays-Bas) qui fournit les arêtes du graphe sous forme d'objets géométriques purs. De préférence, le graphe routier est cohérent avec le réseau routier (toutes les connexions physiques entre deux routes, et uniquement celles-ci, sont représentées par les noeuds du graphe), aussi invariant que possible dans le temps. De plus, le graphe routier peut être simplifié, en ne prenant pas en compte les portions de routes telles que les impasses, les chemins dans les parcs ou les pistes cyclables, en fonction du type du véhicule considéré (par exemple pour le mode de réalisation des véhicules automobiles, les pistes cyclables peuvent ne pas être prises en compte).

La présente invention est mise en oeuvre pour au moins deux graphes distincts du réseau routier appelés respectivement première représentation du réseau routier et deuxième représentation du réseau routier. Ces deux représentations peuvent être issues de deux sources différentes. De plus, au moins une des deux représentations de réseau routier comprend au moins un paramètre du trafic routier. Les deux représentations de réseau routier peuvent comprendre au moins un paramètre du trafic routier, identique ou différent. Le paramètre de trafic routier est associé à une pluralité de brins de la représentation de réseau routier concernée. Le paramètre de trafic routier peut être choisi notamment parmi :

- La quantité de polluants émis par les véhicules sur le réseau routier, par exemple la quantité d'oxydes d'azote, la quantité de dioxyde de carbone, la quantité d'hydrocarbures imbrulés, etc.,
- Le débit routier, c'est-à-dire le nombre de véhicules par unité de temps qui passent par un réseau routier,
- Une vitesse de véhicules, par exemple une vitesse moyenne ou une vitesse instantanée,
- La quantité des émissions sonores émises par les véhicules sur le réseau routier, etc.

Selon un mode de réalisation de l'invention, le procédé peut comprendre une étape préalable d'acquisition d'au moins un paramètre de trafic routier. De préférence, cette étape d'acquisition d'au moins un paramètre routier peut inclure une mesure du paramètre de trafic routier en au moins un point du réseau routier. Ainsi, le paramètre de trafic routier peut être précis et fiable, et peut permettre une détermination précise de l'attribut de trafic routier du réseau routier. Alternativement ou cumulativement, cette étape d'acquisition d'au moins un paramètre routier peut inclure une acquisition depuis un système d'information géographique (SIG). Here ™, Google Maps ™, OpenStreetMap ™ sont des exemples de système d'information géographique. Les paramètres de trafic routier sont habituellement disponibles et depuis n'importe quel lieu.

Selon un exemple non limitatif de réalisation, si la première représentation de réseau routier comprend la vitesse des véhicules en tant que paramètre de trafic routier, si la deuxième représentation de réseau routier comprend la limitation de vitesse, et si l'attribut de trafic routier est une vitesse des véhicules, alors on peut déterminer sur les brins de la troisième représentation de réseau routier la vitesse des véhicules en tenant compte de la limitation de vitesse. Ainsi, la vitesse de véhicules peut être plus fiable car dépendante des limitations de vitesse, ce qui n'était pas le cas dans la première représentation.

En outre, d'autres données macroscopiques du réseau routier peuvent être associées aux brins routiers d'au moins une des deux représentations de réseau routier : par exemple des données de topologie (c'est-à-dire la pente, la courbure de la route, les intersections, la signalisation, etc.), le type de brin routier (par exemple route urbaine, autoroute, etc.), le nombre de voies du brin routier, la vitesse maximale du brin routier, la signalisation du brin routier, la pente du brin routier, la longueur du brin routier, la typologie de véhicules acceptés, une infrastructure présente sur le brin qui pourrait influencer la conduite (arrêts de bus, stations-services, stations de recharge, signalisation, etc.), etc. Il s'agit essentiellement de paramètres liés à l'infrastructure du réseau routier. De préférence, les données macroscopiques du réseau routier peuvent être fournies par un système d'information géographique (SIG). Here ™, Google Maps ™, OpenStreetMap ™ sont des exemples de système d'information géographique. Les données macroscopiques sont habituellement disponibles depuis n'importe quel lieu.

La présente invention concerne donc un procédé de détermination d'au moins un attribut de trafic routier sur un réseau routier. Ce procédé met en oeuvre les étapes suivantes :

1. Elimination des brins
2. Correspondance des brins
3. Construction de la troisième représentation
4. Détermination de l'attribut

Ces étapes peuvent être mises en oeuvre par des moyens informatiques, par exemple un ordinateur ou un serveur. Ces étapes seront détaillées dans la suite de la description.

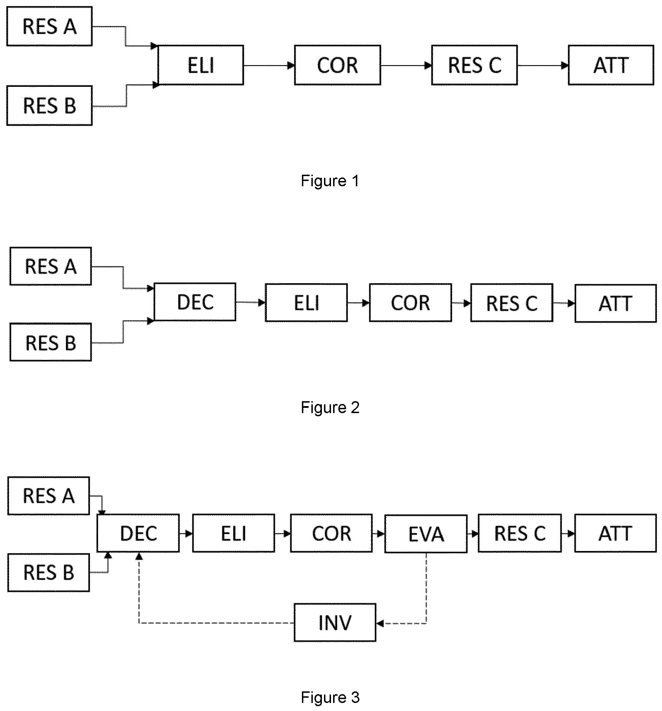

La figure 1 illustre, schématiquement et de manière non limitative, les étapes du procédé de détermination d'au moins un attribut de trafic routier selon un premier mode de réalisation. Une première représentation du réseau routier (RES A) et une deuxième représentation du réseau routier (RES B) sont mises en oeuvre dans ce procédé. Au moins un de ces deux graphes routiers possèdent au moins un paramètre de trafic routier. Puis, pour chaque brin de la première représentation du réseau routier (RES A), on élimine (ELI) des brins de la deuxième représentation de réseau routier (RES B), au moyen notamment d'une version de la distance de Fréchet discrète. On détermine ensuite une correspondance (COR) entre des brins de la première représentation de réseau routier (RES A) et des brins de la deuxième représentation de réseau routier (RES B) parmi les brins non éliminés. Cette correspondance permet de construire une troisième représentation de réseau routier (RES C), et de déterminer au moins un attribut de trafic routier (ATT).

Conformément à une mise en oeuvre de l'invention, le procédé peut comporter en outre une étape préalable de pré-traitement des première et deuxième représentations de réseau routier. Ainsi, la forme des deux représentations peut être adaptée à la mise en correspondances des brins et de l'au moins un paramètre de trafic routier. Cette étape de pré-traitement peut comprendre une sous-étape de découpe de chaque représentation de réseau routier en plusieurs portions de réseau routier. Puis, on peut appliquer les étapes d'élimination des brins et de correspondance des brins pour chaque portion de réseau routier. Cette étape permet de limiter la zone sur laquelle on détermine la correspondance des brins, ce qui permet de réduire les ressources informatiques utiles (mémoire et processeurs), ainsi que le temps de calcul.

Pour cette mise en oeuvre, le procédé peut comprendre les étapes suivantes :

A) Pré-traitement des représentations de réseau routier

1. Elimination des brins
2. Correspondance des brins
3. Construction de la troisième représentation
4. Détermination de l'attribut

Ces étapes peuvent être mises en oeuvre par des moyens informatiques, par exemple un ordinateur ou un serveur. Ces étapes seront détaillées dans la suite de la description.

La figure 2 illustre, schématiquement et de manière non limitative, les étapes du procédé selon cette mise en oeuvre. Les étapes identiques aux étapes de la figure 1 ne sont pas redétaillées. Le procédé comprend une étape supplémentaire de pré-traitement des représentations de réseau routier, avec une sous-étape de découpe (DEC) des représentations de réseau routier (RES A ; RES B). Ensuite, les étapes d'élimination des brins (ELI) et de correspondance (COR) des brins sont appliquées pour les portions découpées de réseau routier.

Selon un mode de réalisation de l'invention, le procédé peut comprendre en outre une étape d'évaluation de la correspondance entre les première et deuxième représentations de réseau routier. Cette étape d'évaluation peut être mise en oeuvre entre l'étape de correspondance des brins et de construction de la troisième représentation de réseau routier. En cas d'une évaluation satisfaisant, on peut continuer par l'étape de construction de la troisième représentation. En cas d'une évaluation non satisfaisante, on peut réitérer les étapes d'élimination des brins et de correspondance des brins en inversant l'ordre de la première représentation de réseau routier et de la deuxième représentation de réseau routier. De cette manière, on peut améliorer la robustesse et la fiabilité de la mise en correspondance des deux graphes routiers, et améliorer la robustesse et la précision de la détermination de l'attribut de trafic routier.

Pour cette mise en oeuvre, le procédé peut comprendre les étapes suivantes :

- 1. Elimination des brins
- 2. Correspondance des brins
- B) Evaluation de la correspondance
- 3. Construction de la troisième représentation
- 4. Détermination de l'attribut

Ces étapes peuvent être mises en oeuvre par des moyens informatiques, par exemple un ordinateur ou un serveur. Ces étapes seront détaillées dans la suite de la description.

La figure 3 illustre, schématiquement et de manière non limitative, les étapes du procédé selon cette mise en oeuvre. La figure 3 reprend le mode de réalisation de la figure 2, toutefois cette mise en oeuvre est adaptée également au mode de réalisation de la figure 1. Les étapes identiques aux étapes de la figure 2 ne sont pas redétaillées. Le procédé comprend une étape supplémentaire d'évaluation (EVA) de la correspondance des brins (COR). Dans le cas d'une évaluation satisfaisante, on continue le procédé par l'étape de construction de la troisième représentation de réseau routier (RES C). Dans le cas d'une évaluation non satisfaisante, on inverse (INV) l'ordre des représentations de réseau routier (RES A) et (RES B), et on répète les étapes d'élimination des brins (ELI) et de correspondance des brins (COR), ainsi que, le cas échéant, la sous-étape de découpe (DEC) des représentations de réseau routier.

A) Pré-traitement des représentations de réseau routier

Lors de cette étape facultative, on prétraite les première et deuxième représentations de réseau routier pour homogénéiser les deux graphes routiers. Ce mode de réalisation est particulièrement adapté pour le cas dans lequel les données concernant les représentations de réseau routier ont tendance à inclure différentes informations et différents paramètres sous différents formats. Cette étape permet alors de préparer les données dans le format correct.

Selon un mode de réalisation, chaque brin routier peut être décrit par une séquence de paires de latitudes et de longitudes. Chaque séquence de points de latitude et de longitude doit avoir un minimum de deux coordonnées, correspondant aux noeuds du réseau. La quantité de points disponibles par brin routier a un impact direct sur la précision de l'intégration des réseaux routiers. Avantageusement, chaque brin routier peut être décrit, si disponible, par les noms des routes correspondantes (appelé également nom des brins). Le fait de fournir des noms de routes peut améliorer la correspondance de manière significative.

Selon un aspect de l'invention, cette étape peut comporter en outre une projection cartographique ou l'utilisation un système géographique de coordonnées pour établir un référentiel géographique identique.

Conformément à une mise en oeuvre, cette étape peut comprendre en outre une sous-étape d'interpolation des brins routiers. En effet, la densité de la séquence de points définissant un brin routier peut varier non seulement en fonction du réseau routier, mais aussi en fonction du brin spécifique. Cette sous-étape préliminaire vise à uniformiser la résolution des brins routiers par interpolation en distance.

De plus, le pré-traitement peut comprendre en outre la sous-étape de découpe des représentations de réseau routier en portions de réseau routier. Cette sous-étape vise à réduire les ressources informatiques utiles et le temps de calcul de l'invention en divisant l'algorithme de correspondance en différentes portions ou zones. Par exemple, les zones peuvent être rectangulaires, carrés, circulaires, triangulaires ou de toute forme analogue. Selon une option de réalisation, on peut commencer par sélectionner les dimensions de portions de réseau routier entourant chaque brin de la première représentation de réseau routier. Par exemple, on peut définir une portion de réseau routier ayant une enveloppe de 100m (alternativement 50, 200 ou 500m, etc.) autour d'un brin routier considéré. D'autres méthodes peuvent être mises en oeuvre. Puis, on reproduit la même sélection de portions de réseau routier sur la deuxième représentation de réseau routier, de telle sorte que les portions de réseau routier de la deuxième représentation de réseau routier correspondent aux portions de réseau routier de la première représentation de réseau routier.

1. Elimination des brins

Lors de cette étape, pour chaque brin de la première représentation de réseau routier, on élimine des brins de la deuxième représentation de réseau routier au moyen d'au moins une distance de Fréchet discrète (par exemple selon une version de cette distance telle que décrite ci-dessous). En d'autres termes, lors de cette étape, pour chaque brin de la première représentation, on retire les brins de la deuxième représentation qui correspondent le moins au brin considéré de la première représentation, selon un critère défini par la distance de Fréchet discrète. L'élimination de brins est mise en oeuvre pour chaque brin de la première représentation de réseau routier. Ainsi, cette étape permet de limiter le nombre de brins à comparer pour l'étape de correspondance des brins.

Pour le mode de réalisation pour lequel on met en oeuvre la sous-étape de découpe en portions de réseau routier, cette étape d'élimination de brins peut être mise en oeuvre uniquement pour les brins appartenant à la même portion de réseau routier.

Selon un mode de réalisation, cette étape d'élimination de brins peut mettre en oeuvre une séquence de sous-étapes, chaque sous-étape étant prévue pour éliminer des brins. Ainsi, plusieurs méthodes d'élimination sont appliquées, ce qui permet une meilleure sélectivité des brins, permettant une meilleure correspondance des brins, et par conséquent une meilleure précision de l'attribut de réseau routier. Cette séquence de sous-étapes peut comprendre au moins une des sous-étapes suivantes :

- Elimination en fonction de la distance de Fréchet discrète,
- Elimination en fonction du nom des brins routiers,
- Elimination en fonction d'un critère de couverture, etc.

Ces sous-étapes peuvent être mises en oeuvre dans cet ordre, ou dans tout autre ordre. Chaque sous-étape compare le critère à un seuil prédéterminé pour éliminer les brins de la deuxième représentation de réseau routier supérieur à ce seuil prédéterminé. Par exemple, pour la distance de Fréchet discrète : on peut éliminer les brins dont la distance est supérieure à un seuil prédéterminé.

De préférence, l'étape d'élimination des brins met en oeuvre au moins la sous-étape en fonction de la distance de Fréchet discrète et la sous-étape en fonction d'un critère de couverture. Ainsi, au moins deux méthodes d'élimination sont utilisées, ce qui favorise le nombre de brins éliminés.

On rappelle que la distance de Fréchet entre la trajectoire A et B peut être décrite de manière informelle comme la longueur de la laisse la plus courte permettant à une personne sur un trajet A de promener un chien sur un trajet B (sans faire marche arrière). On appelle la distance modifiée de Fréchet discrète une détermination d'une distance se basant sur la méthode mise en oeuvre pour le calcul de la distance Fréchet en ne considérant pas la distance la plus grande entre les points des parcours des deux trajets considérés, mais une somme des distances entre les deux trajets considérés de manière discrète. La mesure de la distorsion temporelle dynamique (DTW), introduite dans le domaine de la reconnaissance vocale comme mesure de similarité entre des séries temporelles, est également pertinente.

Pour la distance de Fréchet discrète, on construit de la même manière que pour la distance de Fréchet classique :

- une polyligne reliant les points du brin à caractériser (première représentation),
- une polyligne reliant les points du brin (deuxième représentation), et ensuite
- l'ensemble des liaisons qui relient un point de chaque polyligne.

L'étape de détermination des liaisons qui relient un point de chaque polyligne est effectuée de manière dynamique et récursive. Deux brins discrets X et Y de longueurs respectives N et M sont considérés ici. La première étape concerne la construction d'une matrice de distance cumulative notée D qui contient à la ligne n, et colonne m, la distance de Fréchet discrète calculée du début de chaque trajet jusqu'au points n et m (où $1 \leq n \leq N$ et $1 \leq m \leq M$). On peut alors écrire :

$$D(n,m) = F_d(Xn, Ym)$$

Avec $F_d$ la version discrète de la distance de Fréchet, Xn, Ym les trajets tronqués de longueur n et m. La différence entre la version continue et discrète de la distance de Fréchet vient du fait que l'on ne considère pas les paramétrisations de la distance de Fréchet comme des fonctions continues du temps mais uniquement l'ordonnancement des liaisons des trajets.

La matrice peut être calculée récursivement comme suit :

$$D_{i,j} = d(x_i, y_j) + min(D_{i-1,j}, D_{i,j-1}, D_{i-1,j-1}),$$

Où les indices i et j sont compris entre 1 et la longueur de chaque trajectoire, et où x et y représentent les points ordonnés sur chaque trajectoire. L'initialisation est définie avec :

$$D_{0,0} = 0, \qquad D_{1,0} = \infty, \qquad D_{0,1} = \infty,$$

et le résultat de similarité traditionnel est alors simplement donné par le coin supérieur droit de cette matrice D.

Enfin, pour définir une distance de Fréchet discrète (modifiée dans le cadre de la présente demande), on peut la rendre sensible aux sous-trajectoires. En effet, il arrive souvent que des tronçons routiers de tailles très différentes représentent la même rue. Dans cet objectif, on peut restreindre le couplage optimal en imposant une saturation sur le nombre de liaisons par point : chaque point peut être couplé avec au plus un nombre fixe de points de la trajectoire opposée. Cela évite que le dernier point du plus petit brin ou sous-brin soit associé à tout le reste des points du plus grand brin, ce qui augmenterait autrement la distance de trajectoire. Selon une mise en oeuvre, la distance modifiée de Fréchet discrète peut s'obtenir en prenant la moyenne, un centile, la médiane de la séquence de distances résultant du couplage optimal. Ainsi, on peut augmenter encore la robustesse de la fonction de similarité.

Conformément à un mode de réalisation, on peut utiliser la distance Haversienne et/ou la distance Euclidienne ou distance analogue pour déterminer la distance de Fréchet.

La sous-étape d'élimination des brins en fonction des noms des brins (par exemple les noms de rue) est optionnelle, car elle peut être mise en oeuvre si les première et deuxième représentations de réseau routier comprennent les noms des brins routiers. Cette similarité peut être déterminée par une méthode de détermination d'une distance d'édition (de l'anglais « edit distance »). Par exemple, la distance de Levensthein, qui est une distance au sens mathématique du terme, donnant une mesure de la différence entre deux chaînes de caractères (en l'occurrence les chaînes de caractères des noms des brins). Cette distance est égale au nombre minimal de caractères qu'il faut supprimer, insérer ou remplacer pour passer d'une chaîne de caractères à l'autre. Selon un autre exemple, on peut appliquer l'algorithme de Wagner-Fischer, qui est un algorithme de calcul de distance d'édition entre deux chaînes de caractères. Tout autre distance d'édition ou algorithme analogue peuvent être mis en oeuvre pour cette sous-étape.

Une sous-étape d'élimination des brins en fonction de la couverture peut également être mise en oeuvre. On appelle couverture, la portion (c'est-à-dire la longueur) du brin considéré de la première représentation de réseau routier qui est couverte (superposée) par un brin de la deuxième représentation de réseau routier. Autrement dit, la couverture peut être définie comme le ratio de la longueur du brin de la première représentation de réseau routier associée à un brin de la deuxième représentation de réseau routier par rapport à la longueur totale du brin de la première représentation de réseau routier. La couverture peut être définie par un pourcentage. Cette couverture peut être déterminée lors de la détermination de la distance de Fréchet discrète, notamment sous la version décrite ci-dessus. En effet, la version de la distance de Fréchet présentée peut comprendre une saturation sur le nombre de liaisons par points. C'est pourquoi, des points d'un brin de la première représentation de réseau routier peuvent être liés à aucun point de brin de la deuxième représentation de réseau routier (par exemple si le brin de la première représentation de réseau routier est plus court que le brin de la deuxième représentation de réseau routier). Cette sous-étape permet de donner une priorité aux brins de grande longueur lors de l'étape de correspondance.

Selon un mode de réalisation, cette étape d'élimination peut en outre prendre en compte la connectivité entre les brins. En d'autres termes, les première et deuxième représentations de réseau routier peuvent comprendre les informations relatives à la connectivité des brins (autrement dit les brins entrant et sortant de chaque brin considéré). Dans ce cas, l'étape d'élimination de brins peut prendre en compte cette connectivité pour éliminer des brins, en particulier les brins n'ayant pas les mêmes brins entrant et/ou sortant du brin considéré.

2. Correspondance des brins

Lors de cette étape, pour chaque brin de la première représentation de réseau routier, on détermine une correspondance entre le brin considéré de la première représentation de réseau routier et au moins un brin de la deuxième représentation de réseau routier. Cette correspondance est déterminée parmi les brins non éliminés à l'étape 1. En d'autres termes, parmi les brins non éliminés à l'étape précédente, on détermine pour chaque brin de la première représentation au moins un brin de la deuxième représentation qui s'en rapproche le plus. La correspondance de brins est mise en oeuvre pour chaque brin de la première représentation de réseau routier. Cette étape peut être mise en oeuvre par l'optimisation d'au moins un critère utilisé pour l'élimination des brins : par exemple la distance de Fréchet discrète minimale des brins non éliminés, le taux de couverture maximal des brins non éliminés et/ou la distance d'édition minimale des brins non éliminés. Grâce au tri réalisé à l'étape d'élimination des brins, le nombre de brins possibles est minimisé, ce qui permet de réaliser cette étape de correspondance des brins de manière robuste et fiable, avec des besoins en ressources informatiques limités. Il est possible qu'un brin de la première représentation de réseau routier n'ait pas de brins correspondants au sein de la deuxième représentation de réseau routier.

Pour le mode de réalisation pour lequel on met en oeuvre la sous-étape de découpe en portions de réseau routier, cette étape de correspondance des brins peut être mise en oeuvre uniquement pour les brins appartenant à la même portion de réseau routier.

Selon un mode de réalisation, cette étape de correspondance peut en outre prendre en compte la connectivité entre les brins. En d'autres termes, les première et deuxième représentations de réseau routier peuvent comprendre les informations relatives à la connectivité des brins (autrement dit les brins entrant et sortant de chaque brin considéré). Dans ce cas, l'étape de correspondance de brins peut prendre en compte cette connectivité pour mettre en correspondance des brins, en particulier les brins ayant les mêmes brins entrant et/ou sortant du brin considéré.

B) Evaluation de la correspondance

Lors de cette étape facultative, on évalue la correspondance des brins déterminée à l'étape 2. Par exemple, cette évaluation peut prendre la forme de la détermination du pourcentage de brins qui ont été mis en correspondance pour chaque représentation de réseau routier. En effet, le pourcentage de brins appariés de l'une ou l'autre des représentations de réseau routier peut être faible. Cela peut être dû à des discontinuités de brins ou à des brins manquants. En cas d'une évaluation satisfaisante (pourcentage de brins appariés supérieur à un seuil prédéterminé), le procédé peut continuer avec l'étape 3. En cas d'une évaluation non satisfaisante (pourcentage de brins appariés inférieur à un seuil), on peut réitérer les étapes 1 et 2 d'élimination des brins et de correspondance des brins en modifiant l'ordre de la première représentation de réseau routier et de la deuxième représentation de réseau routier. En d'autres termes, pour la réitération des étapes, la deuxième représentation de réseau routier devient la première représentation de réseau routier et inversement. De cette manière, on peut améliorer la robustesse et la fiabilité de la mise en correspondance des deux graphes routiers, et améliorer la robustesse et la précision de la détermination de l'attribut de trafic routier. Lorsqu'on réitère les étapes par modification de l'ordre des représentations de réseau routier, on réalise par ce biais également le multi-appariement des deux représentations de réseau routier. Les appariements identiques, le cas échéant, peuvent être supprimés une fois les étapes terminées.

De plus, une version symétrique de l'orientation de la distance Fréchet peut également être appliquée si la direction de la route n'est pas correctement décrite par les représentations de réseau routier.

3. Construction de la troisième représentation

Lors de cette étape, on construit une troisième représentation de réseau routier, au moyen des deux représentations de réseau routier et de la correspondance de brins déterminée à l'étape 2. En d'autres termes, on construit une troisième représentation de réseau routier qui correspond à la correspondance des deux représentations de réseau routier initiales, de manière à avoir les paramètres des deux représentations de réseau routier dans un seul référentiel géographique.

Pour la construction de la troisième représentation de réseau routier, on peut construire les brins en tant que :

- Brins de la première représentation de réseau routier, ou
- Brins de la deuxième représentation de réseau routier, ou
- Fusion des brins des première et deuxième représentations de réseau routier, par exemple, il peut s'agir d'une moyenne des coordonnées des brins correspondants des deux représentations de réseau routier (éventuellement après un rééchantillonnage des brins sur un nombre égal de points), ou par tout méthode analogue.

En outre, la troisième représentation de réseau routier peut comprendre au moins un paramètre macroscopique lié à l'une des première et deuxième représentations de réseau routier (par exemple la topologie).

4. Détermination de l'attribut

Lors de cette étape, on détermine l'au moins un attribut du trafic routier au moyen de la troisième représentation construite à l'étape 3, et au moyen de l'au moins un paramètre de trafic routier d'une des représentations de réseau routier. De préférence, l'attribut du trafic routier peut être déterminé pour une pluralité de brins de la troisième représentation de réseau routier. En fonction du type de l'au moins un paramètre de trafic routier et du type de l'attribut de trafic routier, l'attribut de trafic routier peut correspondre directement au paramètre de trafic routier et il est alors associé à la troisième représentation de réseau routier, ou peut être déterminé à partir de ce paramètre. Ainsi, le procédé selon l'invention permet d'obtenir au moins un attribut de trafic routier et un nouveau graphe routier augmenté qui peut ne correspondre à aucun des graphes routiers d'entrée mais qui contient les informations de l'ensemble de ces derniers, en particulier les paramètres de trafic routier.

Conformément à une mise en oeuvre, pour laquelle le même type de paramètre de trafic routier est associé aux brins des première et deuxième représentations de réseau routier, on peut déterminer l'attribut de trafic routier à partir des paramètres de trafic routier de chaque représentation, par exemple au moyen d'une moyenne, éventuellement au moyen d'une pondération, ou toute autre méthode analogue. Grâce à la prise en compte d'au moins deux paramètres de trafic routier, on améliore la précision de la détermination de l'attribut de trafic routier.

Selon un aspect, pour lequel un paramètre de trafic routier est disponible sur une seule des deux représentations de réseau routier initiales, on peut déterminer l'attribut directement à partir du paramètre routier, et il est alors associé à la troisième représentation de réseau routier.

Selon un mode de réalisation, la détermination de l'attribut de trafic routier peut dépendre en outre d'au moins un paramètre macroscopique lié à l'une des première et deuxième représentations de réseau routier. En effet, l'attribut de trafic routier peut dépendre d'un paramètre macroscopique. Par exemple, le débit de véhicules peut dépendre du nombre de voies du brin, ou la quantité de polluants émis peut dépendre de la pente du brin, ou la vitesse des véhicules peut dépendre de la limitation de vitesse du brin.

Selon un mode de réalisation, si un brin de la troisième représentation correspond à au moins deux brins de la deuxième représentation, chacune ayant un paramètre de trafic routier associé, alors on peut déterminer l'attribut de trafic routier du brin de la troisième représentation à partir des paramètres de chaque brin de la deuxième représentation concerné, par exemple au moyen d'une moyenne, éventuellement au moyen d'une pondération, ou toute autre méthode analogue. Grâce à la prise en compte des plusieurs paramètres de trafic routier, on améliore la précision de la détermination de l'attribut de trafic routier

Selon un exemple non limitatif de réalisation, si la première représentation de réseau routier comprend la vitesse des véhicules en tant que paramètre de trafic routier, si la deuxième représentation de réseau routier comprend la limitation de vitesse, et si l'attribut de trafic routier est une quantité de polluants émis, alors on peut déterminer dans un premier temps sur les brins de la troisième représentation de réseau routier la vitesse des véhicules en tenant compte de la limitation de vitesse (par exemple en « bridant » la vitesse à la limitation de la vitesse), puis on peut appliquer un modèle de polluants émis par les véhicules. Un tel modèle relie la vitesse de véhicule à une quantité de polluants, il peut s'agir d'un modèle d'émissions macroscopiques, tel que le modèle COPERT décrit dans le document : « Ntziachristos, L., Gkatzoflias, D., Kouridis, C., & Samaras, Z. (2009). COPERT: a European road transport émission inventory model. In Information technologies in environmental engineering (pp. 491-504) », ou le modèle décrit dans l'une des demandes de brevet FR3049653 (US2019138669) ou FR3122011 (US2022335822).

Ainsi grâce à cette étape, la correspondance permet de contextualiser et expliquer les flux de mobilité ou les émissions polluantes à l'aide de nouveaux attributs de trafic routier et donc d'extrapoler ou robustifier les estimations à d'autres zones ayant des attributs similaires.

Pour le mode de réalisation, pour lequel le procédé est mis en oeuvre pour un nombre de représentations de réseau de transport supérieur à deux, les étapes du procédé peuvent être répétées pour une mise en correspondance des représentations de réseau de transport deux à deux, jusqu'à obtenir une seule représentation en résultant.

De plus, le procédé selon l'invention peut comporter une étape d'affichage de l'attribut de trafic routier. Lors de cette étape, on affiche l'attribut de trafic routier déterminé sur une carte de transport, notamment une carte routière (sur un graphe routier correspondant à la troisième représentation de réseau routier). Cet affichage peut prendre la forme d'une note ou d'un code couleur ou d'une épaisseur de représentation de la route. Cet affichage peut être réalisé à bord du véhicule : sur le tableau de bord, sur un dispositif portatif autonome, tel qu'un appareil de géolocalisation (de type GPS), un téléphone portable (de type téléphone intelligent). Il est également possible d'afficher l'attribut de trafic routier sur un site internet. De plus, l'attribut de trafic routier peut être partagé avec les pouvoirs publics (par exemple gestionnaire de la voirie) et les entreprises de travaux publics. Ainsi, les pouvoirs publics et les entreprises de travaux publics peuvent déterminer les routes ayant un attribut de trafic routier élevé (par exemple débit, vitesse ou quantité de polluants émis) et adapter les routes aux utilisateurs (par exemple création de nouvelles voies, modification de la signalisation, etc.).

En outre, l'invention concerne un procédé de gestion d'infrastructures d'un réseau routier. Pour ce procédé, on peut mettre en oeuvre les étapes suivantes :

a) On détermine au moins un attribut de trafic routier au moyen d'un procédé de détermination d'attribut de trafic routier selon l'une quelconque des variantes ou des combinaisons de variantes décrites ci-dessus ; et
b) On modifie au moins une infrastructure du réseau routier en fonction de l'attribut de trafic routier déterminé, par exemple une infrastructure pour lequel le débit de véhicules, la vitesse des véhicules ou la quantité de polluants émis est maximal ou supérieur à un seuil prédéterminé.

Ainsi, on peut gérer un réseau routier pour limiter voire éviter les pics de pollution, les embouteillages, les risques d'accident.

Selon un mode de réalisation, la modification de l'infrastructure peut être choisie notamment parmi l'ajout d'une signalisation (limitation de vitesse, feu, céder le passage, stop, etc.), la construction d'une nouvelle voie, passage d'un brin à sens unique, construction d'une nouvelle route, etc.

Exemples

Les caractéristiques et avantages du procédé selon l'invention apparaîtront plus clairement à la lecture des exemples ci-après.

Le premier exemple concerne la correspondance de deux représentations de réseau routier complémentaires du même emplacement.

Pour cet exemple, on applique le modèle des émissions de polluants décrit dans la demande de brevet FR3122011 (US2022335822), pour déterminer les différentes quantités de polluants émis pour les brins d'un réseau routier. En effet, ce modèle a été développé pour que des caractéristiques telles que la pente, la vitesse limite et la vitesse moyenne par brin (ainsi que des informations supplémentaires telles que l'heure de la journée, la répartition des véhicules, ...) puissent prédire ce type d'émissions. Les réseaux routiers fournis par le groupe Here Technologies reprennent ces informations par segment de route ou brin. Cependant, on sait que les estimations de vitesse moyenne de cet outil ont tendance à être imprécises, affectant la détermination de la quantité d'émissions fournie par le modèle macroscopique. Par conséquent, il est nécessaire d'obtenir de meilleures mesures de vitesse à partir d'une autre représentation de réseau routier.

Pour cet exemple, on considère le cas des quartiers autour de la « Croix-Rousse » dans la métropole de Lyon. Il existe une représentation de ce réseau routier générée avec la technologie BDTOPO®, et au sein de laquelle des données de la vitesse moyenne précise ont été acquises et associées aux brins de cette représentation. Cette représentation est notée BDTOPO. Ainsi, le réseau BDTOPO correspondant à cette localisation inclut les vitesses réelles mesurées par brin en fonction de la période horaire. Malheureusement, ces informations supplémentaires ne peuvent pas être prises en compte directement car les réseaux routiers de Here et de BDTOPO ont des différences importantes.

Pour résumer, l'objectif est de maximiser la précision de prédiction des émissions polluantes par brin sur un réseau routier représentant une zone autour du quartier « Croix-Rousse ». Pour cet exemple, la représentation de réseau routier est noté réseau A. Pour cet objectif, on a besoin d'une bonne estimation de la vitesse moyenne par brin. Cette information nécessaire est contenue sur une représentation de réseau routier différente (BDTOPO ou réseau B) qui représente le même emplacement géographique. Le réseau A permet, quant à lui, de prendre en compte les autres paramètres nécessaires à la détermination précise des émissions polluantes, à savoir, la pente des routes et la limitation de vitesse notamment.

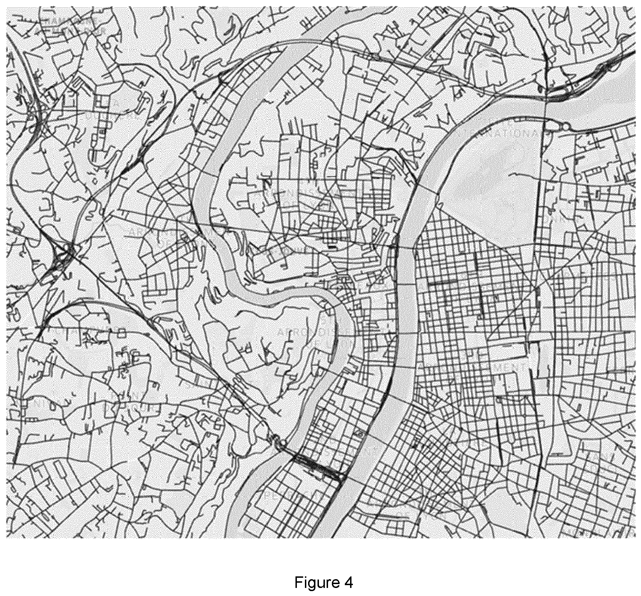

La figure 4 illustre, schématiquement et de manière non limitative, le réseau A.

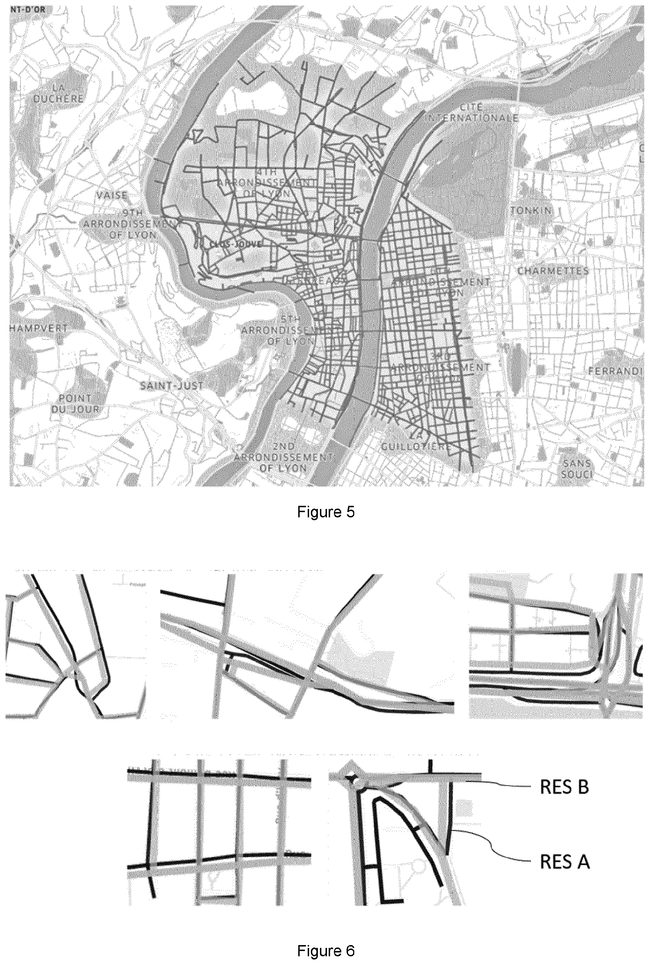

La figure 5 illustre, schématiquement et de manière non limitative, le réseau B.

On peut noter que le réseau A est plus grand que le réseau B. Par conséquent, les étapes du procédé selon l'invention est mis en oeuvre sur la zone définie par le réseau B.

La figure 6 illustre quelques portions du réseau routier avec la superposition du réseau A (RES A), représenté par les lignes noires, et du réseau B (RES B), représenté par les lignes grises. On observe que tous les brins routiers du réseau B ne sont pas superposés aux brins du réseau A. Il est donc nécessaire de mettre en correspondance ces deux réseaux.

On applique alors le procédé selon l'invention, en prenant en compte pour le réseau B, la vitesse des véhicules en tant que paramètre de trafic routier. Pour cet exemple, les noms des brins n'ont pas été considérés : l'élimination des brins a été mise en oeuvre par la distance de Fréchet et par la couverture au moyen de seuils prédéfinis. De plus, étant donné que le degré de continuité souhaité n'a pas été atteint (étape d'évaluation), les étapes d'élimination des brins et de correspondance des brins ont été répétées en considérant le réseau B en première représentation de réseau routier, et en considérant le réseau A en deuxième représentation de réseau routier, c'est-à-dire en inversant les représentations de réseau routier. Le procédé permet de construire la troisième représentation de réseau routier, notée réseau C, puis permet de déterminer plusieurs attributs de trafic routier : la vitesse des véhicules ainsi que les quantités de polluants émis par les véhicules. Pour cet exemple, on détermine les attributs de trafic routier aux heures de pointe du matin.

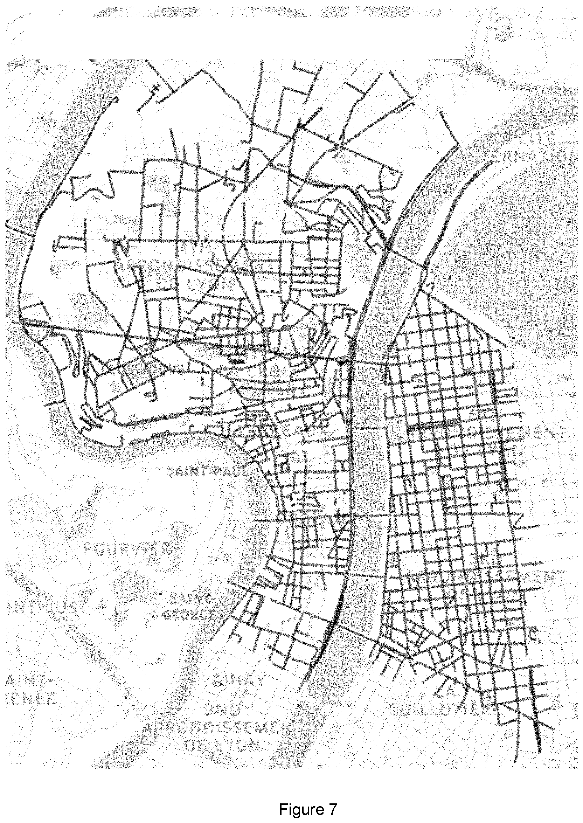

La figure 7 illustre, schématiquement et de manière non limitative, le réseau C ainsi construit.

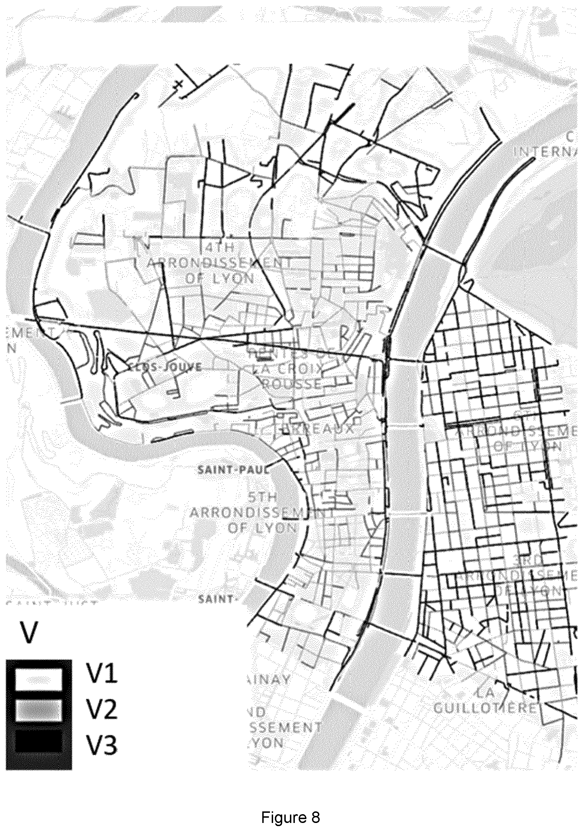

La figure 8 illustre, schématiquement et de manière non limitative, la vitesse des véhicules V sur le réseau C déterminée par le procédé selon l'invention, à partir notamment des informations de vitesse appartenant au réseau B. La vitesse des véhicules est pour cet exemple un attribut de trafic routier, qui était imprécis sur le réseau A seul. Le niveau de gris des brins routiers représente la vitesse des véhicules. Les brins les plus foncés ont une vitesse V3 comprise entre 24 et 48 km/h, les brins en gris intermédiaire ont une vitesse V2 comprise entre 15 et 24 km/h, et les brins les plus clairs ont une vitesse V1 comprise entre 3 et 15 km/h.

Ces indications de vitesse proviennent du réseau B, et servent d'entrée du modèle des émissions de polluants, pour déterminer la quantité d'oxyde d'azote (Nox) émis, la quantité de dioxyde de carbone ($CO_2$) émis et la quantité d'hydrocarbures imbrulé (HC) émis qui sont également des attributs de trafic routier.

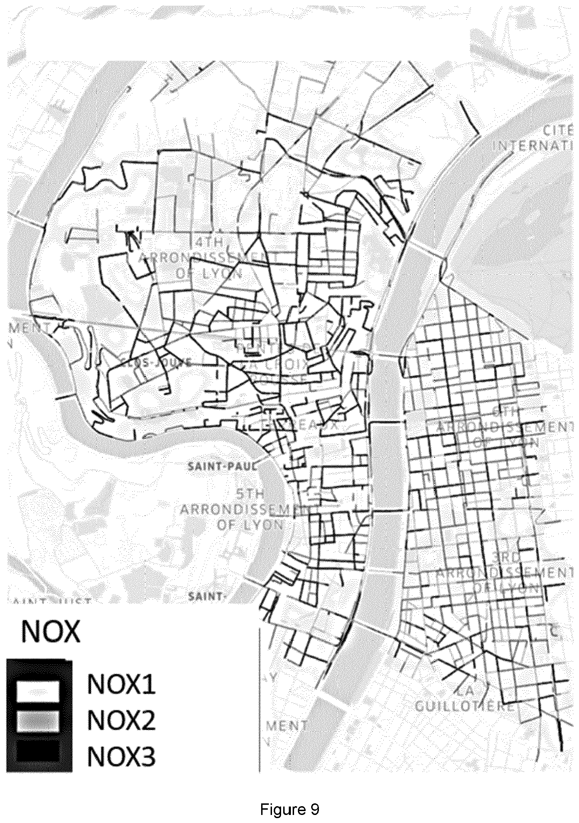

La figure 9 illustre, schématiquement et de manière non limitative, la quantité d'oxyde d'azote émis sur le réseau C déterminée par le procédé selon l'invention à partir de la vitesse moyenne et du modèle des émissions de polluants. La quantité d'oxyde d'azote est pour cet exemple un attribut de trafic routier. Le niveau de gris des brins routiers représente la quantité de Nox émis. Les brins les plus foncés ont une quantité NOX3 comprise entre 954 et 1800 mg/km, les brins en gris intermédiaire ont une quantité NOX2 comprise entre 637 et 954 mg/km, et les brins les plus clairs ont une quantité NOX1 comprise entre 180 et 637 mg/km.

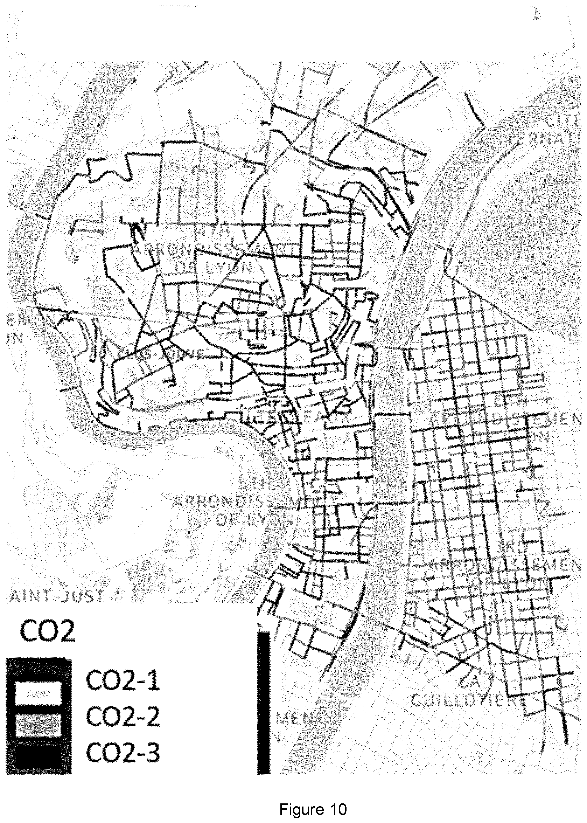

La figure 10 illustre, schématiquement et de manière non limitative, la quantité de dioxyde de carbone émis sur le réseau C déterminée par le procédé selon l'invention à partir de la vitesse moyenne et du modèle des émissions de polluants. La quantité de dioxyde de carbone est pour cet exemple un attribut de trafic routier. Le niveau de gris des brins routiers représente la quantité de $CO_2$ émis. Les brins les plus foncés ont une quantité CO2-3 comprise entre 350 et 550 g/km, les brins en gris intermédiaire ont une quantité CO2-2 comprise entre 250 et 350 g/km, et les brins les plus clairs ont une quantité CO2-1 comprise entre 75 et 250 mg/km.

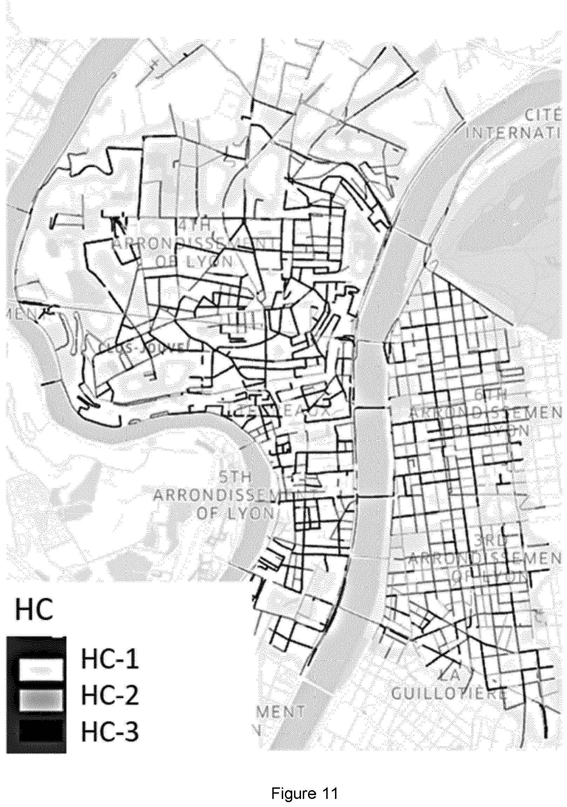

La figure 11 illustre, schématiquement et de manière non limitative, la quantité d'hydrocarbures imbrulés émis sur le réseau C déterminée par le procédé selon l'invention à partir de la vitesse moyenne et du modèle des émissions de polluants. La quantité d'hydrocarbures imbrulés est pour cet exemple un attribut de trafic routier. Le niveau de gris des brins routiers représente la quantité de HC émis. Les brins les plus foncés ont une quantité HC-3 comprise entre 79 et 133 mg/km, les brins en gris intermédiaire ont une quantité HC-2 comprise entre 63 et 79 mg/km, et les brins les plus clairs ont une quantité HC-1 comprise entre 36 et 63 mg/km.

Ainsi, ce premier exemple montre que le procédé selon l'invention permet de déterminer au moins un attribut du réseau routier de manière robuste.

Le deuxième exemple est un exemple comparatif qui compare le procédé selon l'invention avec une méthode alternative d'appariement de réseaux routiers classique, il s'agit de la méthode utilisée par Here ™. Pour cet exemple, on utilise les mêmes réseaux A et B que pour le premier exemple. Les inconvénients de la méthode de cet outil sont multiples. Premièrement, la correspondance mise en oeuvre dans Here a un objectif différent et n'est donc pas optimisée pour la tâche de correspondance des réseaux ; le but est d'apparier des trajectoires GPS à leur réseau routier. C'est pourquoi, pour cet exemple, les brins d'un deuxième réseau peuvent être considérés comme des trajectoires GPS, donnant lieu alors à un multi-appariement (n : m) entre réseaux. Deuxièmement, et surtout, on ne peut pas faire correspondre deux réseaux arbitraires sans passer d'abord par le réseau Here, ce qui peut avoir tendance à amplifier drastiquement leurs imprécisions. Cette problématique existe également pour des autres outils de correspondance de réseaux routiers tels que « SharedStreets » ™.

La méthode de correspondance de Here est basée sur un modèle de Markov caché qui détermine le chemin avec la probabilité la plus élevée, et qui fournit un indice de confiance pour chaque appariement. On peut observer des indices de confiance faibles dans certaines situations critiques (intersections, jonctions, sorties, ...) où le procédé selon l'invention a tendance à réussir.

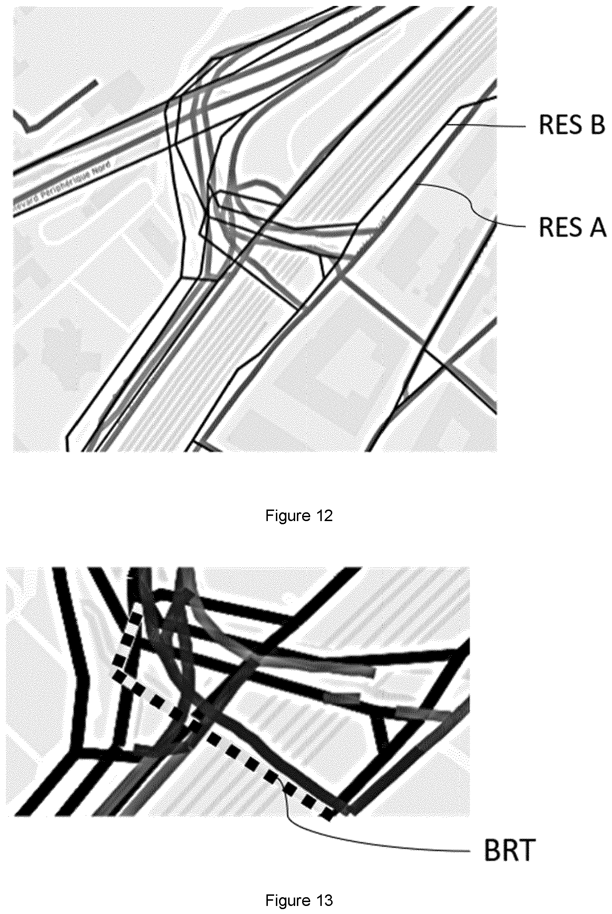

La figure 12 illustre, schématiquement et de manière non limitative, une portion de réseau routier autour du tunnel de Fourvière à Lyon. Sur cette figure, on observe que les réseaux A et B ne sont pas superposés, ce qui nécessite donc la mise en correspondance des représentations de réseau routier.

La figure 13 est un agrandissement de la figure 12, sur lequel on représente un brin test BRT, pour lequel on va comparer les deux méthodes de mises en correspondance des représentations de réseau routier.

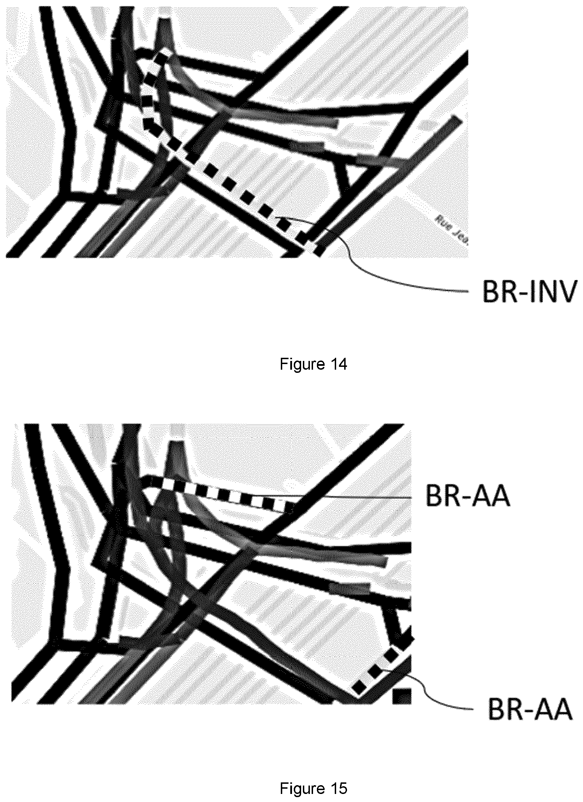

La figure 14 illustre la même zone, et représente en traits discontinus le brin BR-INV déterminé comme correspondant au moyen du procédé selon l'invention.

La figure 15 illustre la même zone, et représente en traits discontinus deux morceaux de brins BR-AA déterminés au moyen de la méthode classique d'Here.

On peut remarquer de cette comparaison que le procédé selon l'invention permet une correspondance adaptée du brin test, alors que la méthode de l'art antérieur ne permet pas une telle correspondance. Par conséquent, le procédé selon l'invention est plus fiable que les méthodes de l'art antérieur.

**Revendications**

**1.** Procédé de détermination d'au moins un attribut du trafic routier (ATT) pour un réseau de transport, ledit attribut de trafic routier étant choisi parmi une quantité de polluants émis par ledit trafic routier, un débit de véhicules, une vitesse de circulation de véhicules, une quantité d'émissions sonores émises par ledit trafic routier, ledit réseau de transport étant représenté par au moins une première et une deuxième représentations (RES A, RES B) distinctes de réseau de transport, chaque représentation (RES A, RES B) de réseau de transport comprenant une pluralité de noeuds représentant des intersections dudit réseau de transport et de brins représentant des portions de route, et au moins une desdites première ou deuxième représentations (RES A, RES B) de réseau de transport comprenant au moins un paramètre du trafic routier associé à plusieurs brins de ladite représentation (RES A, RES B) de réseau de transport, ledit paramètre de trafic routier étant choisi parmi une quantité de polluants émis par ledit trafic routier, un débit de véhicules, une vitesse de circulation de véhicules, une quantité d'émissions sonores émises par ledit trafic routier, **caractérisé en ce qu'**on met en oeuvre les étapes suivantes par des moyens informatiques :

    a. On acquiert ledit au moins paramètre de trafic routier incluant une mesure du paramètre de trafic routier en au moins un point du réseau routier ;
    b. Pour chaque brin de ladite première représentation (RES A, RES B) de réseau de transport, on élimine (ELI) des brins de ladite deuxième représentation de réseau de transport au moyen d'au moins une distance de Fréchet discrète, de telle sorte qu'on élimine des brins de la deuxième représentation (RES B) qui correspondent le moins au brin considéré de la première représentation (RES A) ;

c. Pour au moins un brin de ladite première représentation (RES A) de réseau routier, on détermine une correspondance (COR) entre le brin de ladite première représentation (RES A) de réseau de transport et au moins un brin de ladite deuxième représentation (RES B) de réseau de transport parmi des brins de ladite deuxième représentation (RES B) de réseau de transport non éliminés, par détermination d'au moins un brin de la deuxième représentation qui se rapproche le plus dudit brin de ladite première représentation ;

d. On construit une troisième représentation (RES C) de réseau de transport au moyen desdites première et deuxième représentations (RES A, RES B) de réseau de transport et de ladite correspondance (COR) desdits brins déterminée entre des brins desdites première et deuxième représentations (RES A, RES B) de réseau de transport ; et

e. On détermine ledit attribut du trafic routier sur au moins un brin de ladite troisième représentation (RES C) de réseau de transport au moyen de ladite troisième représentation (RES C) de réseau de transport et dudit paramètre de trafic routier acquis.

2. Procédé selon l'une des revendications précédentes, dans lequel ledit procédé comprend une étape préalable de pré-traitement desdites première et deuxième représentations de réseau de transport.

3. Procédé selon la revendication 2, dans lequel ladite étape de pré-traitement comprend une sous-étape de découpe (DEC) desdites première et deuxième représentations (RES A, RES B) de réseaux de transport en plusieurs portions de réseau de transport, et ensuite on applique les étapes d'élimination (ELI) de brins et de correspondance (COR) de brins pour chaque portion de réseau de transport.

4. Procédé selon l'une des revendications précédentes, dans lequel lesdites première et deuxième représentations (RES A, RES B) de réseau de transport comprennent le nom desdits brins routier, et l'étape d'élimination (ELI) de brins comprend une sous-étape d'élimination de brins de ladite deuxième représentation (RES B) de réseau de transport par comparaison des noms des brins avec ceux ladite première représentation (RES A) de réseau de transport.

5. Procédé selon l'une des revendications précédentes, dans lequel l'étape d'élimination (ELI) de brins comprend en outre une élimination de brins de ladite deuxième représentation (RES B) de réseau de transport en fonction d'un critère de couverture d'un brin de ladite première représentation (RES A) de réseau de transport par un brin de ladite deuxième représentation (RES B) de réseau de transport.

6. Procédé selon l'une des revendications précédentes, dans lequel le procédé comprend en outre une étape d'évaluation (EVA) de la correspondance entre lesdites première et deuxième représentations (RES A, RES B) de réseau de transport, avant l'étape de construction de ladite troisième représentation (RES C) de réseau de transport, et en fonction de ladite évaluation (EVA), on répète les étapes d'élimination de brins et de correspondance de brins en inversant (INV) l'ordre desdites première et deuxième représentations de réseau de transport.

7. Procédé selon l'une des revendications précédentes, dans lequel on construit ladite troisième représentation (RES C) de réseau de transport à partir d'une représentation géométrique de ladite première ou de ladite deuxième représentation (RES A, RES B) de réseau de transport, ou à partir d'une fusion desdites première et deuxième représentations (RES A, RES B) de réseau de transport.

8. Procédé selon l'une des revendications précédentes, dans lequel on affiche ledit attribut de trafic routier sur ladite troisième représentation de réseau de transport au moyen d'un système informatique ou d'un téléphone intelligent.

Figure 1

Figure 2

Figure 3

Figure 4

Figure 5

Figure 6

Figure 7

Figure 8

Figure 9

Figure 10

Figure 11

RES B

RES A

Figure 12

BRT

Figure 13

Figure 14

Figure 15

Europäisches
Patentamt

European
Patent Office

Office européen
des brevets

## RAPPORT DE RECHERCHE EUROPEENNE

Numéro de la demande

EP 24 15 4991

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | FR 3 096 822 A1 (IFP ENERGIES NOW [FR]) 4 décembre 2020 (2020-12-04) | 1-5,7,8 | INV. G08G1/01 |
| A | * alinéas [0016] - [0052], [0082] - [0151] * | 6 | G01C21/32 G01C21/00 G06F16/29 |
| Y | US 2021/231444 A1 (MUDDA SWATHI SREE DURGA [IN] ET AL) 29 juillet 2021 (2021-07-29) * alinéas [0038], [0042], [0052] - [0064], [0111] - [0112] * | 1-5,7,8 | G06T17/05 G08G1/065 G08G1/052 |
| A | CN 111 538 801 A (PLA ROCKET FORCE ENGINEERING DESIGN RES INSTITUTE) 14 août 2020 (2020-08-14) * fiure 1 et texte associé * | 1-8 | |
| Y | FR 3 122 011 A1 (IFP ENERGIES NOW [FR]) 21 octobre 2022 (2022-10-21) * alinéas [0016] - [0032] * | 1-5,7,8 | |
| A,D | VOLKER W.DIETER F.: "Matching spatial data sets: a statistical approach", INTERNATIONAL JOURNAL OF GEOGRAPHICAL INFORMATION SCIENCE, vol. 13, no. 5, 1999, XP002809908, * le document en entier * | 1-8 | DOMAINES TECHNIQUES RECHERCHES (IPC) G08G G01C G06F G06T |
| A,D | NTZIACHRISTOS, L.GKATZOFLIAS, D.KOURIDIS, C.SAMARAS, Z.: "COPERT: a European road transport émission inventory model", INFORMATION TECHNOLOGIES IN ENVIRONMENTAL ENGINEERING, 2009, pages 491-504, XP002809911, * le document en entier * | 1-8 | |

-/--

Le présent rapport a été établi pour toutes les revendications

| Lieu de la recherche | Date d'achèvement de la recherche | Examinateur |
|---|---|---|
| La Haye | 17 juin 2024 | Pariset, Nadia |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 24 15 4991

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | OTHMAN BASSEL ET AL: "A Novel Approach To Traffic Flow Estimation based on Floating Car Data and Road Topography: Experimental Validation in Lyon, France", 2022 IEEE 25TH INTERNATIONAL CONFERENCE ON INTELLIGENT TRANSPORTATION SYSTEMS (ITSC), IEEE, 8 octobre 2022 (2022-10-08), pages 2571-2576, XP034216680, DOI: 10.1109/ITSC55140.2022.9922602 * le document en entier * | 1-8 | |
| | ----- | | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 17 juin 2024 | Pariset, Nadia |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 24 15 4991

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-06-2024

| Document brevet cité au rapport de recherche | Date de publication | Membre(s) de la famille de brevet(s) | Date de publication |
|---|---|---|---|
| FR 3096822 A1 | 04-12-2020 | EP 4026110 A1 | 13-07-2022 |
| | | FR 3096822 A1 | 04-12-2020 |
| | | US 2022215749 A1 | 07-07-2022 |
| | | WO 2020239503 A1 | 03-12-2020 |
| US 2021231444 A1 | 29-07-2021 | EP 3855124 A1 | 28-07-2021 |
| | | US 2021231444 A1 | 29-07-2021 |
| CN 111538801 A | 14-08-2020 | AUCUN | |
| FR 3122011 A1 | 21-10-2022 | EP 4075408 A1 | 19-10-2022 |
| | | FR 3122011 A1 | 21-10-2022 |
| | | US 2022335822 A1 | 20-10-2022 |

EPO FORM P0460

Pour tout renseignement concernant cette annexe : voir Journal Officiel de l'Office européen des brevets, No.12/82

**EP 4 418 230 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2021231444 A
- US 6564224 B
- FR 3049653
- US 2019138669 A
- FR 3122011
- US 2022335822 A

**Littérature non-brevet citée dans la description**

- **VOLKER W. ; DIETER F.** Matching spatial data sets: a statistical approach. *International Journal of Geographical Information Science,* 1999, vol. 13 (5
- **ALT, H. ; EFRAT, A. ; ROTE, G. ; WENK, C.** Matching planar maps. *Journal of Algorithms,* 2003, vol. 49
- Methods and Implementations of Road-Network Matching. **ZHANG, M.** PhD dissertation. Technical University of Munich, 2009
- **ZHANG, M. ; YAO, W. ; MENG, L.** Automatic and Accurate Conflation of Different Road-Network Vector Data towards Multi-Modal Navigation. *ISPRS Int. J. Geo-Inf.,* 2016, vol. 5 (5
- **NTZIACHRISTOS, L. ; GKATZOFLIAS, D. ; KOURIDIS, C. ; SAMARAS, Z.** COPERT: a European road transport émission inventory model. *Information technologies in environmental engineering,* 2009, 491-504